(19) Europäisches Patentamt
European Patent Office
Office européen des brevets

(11) **EP 2 787 299 B1**

(12) **EUROPEAN PATENT SPECIFICATION**

(45) Date of publication and mention
of the grant of the patent:
**10.01.2018 Bulletin 2018/02**

(51) Int Cl.:
*F24F 11/02* *(0000.00)*  *F24F 11/00* *(2018.01)*
*F25B 49/02* *(2006.01)*

(21) Application number: **12853680.2**

(22) Date of filing: **30.11.2012**

(86) International application number:
**PCT/JP2012/081163**

(87) International publication number:
**WO 2013/081132 (06.06.2013 Gazette 2013/23)**

(54) **AIR CONDITIONER**

**KLIMAANLAGE**

**CLIMATISEUR**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2011 JP 2011262298**

(43) Date of publication of application:
**08.10.2014 Bulletin 2014/41**

(73) Proprietor: **Samsung Electronics Co., Ltd.
Gyeonggi-do 16677 (KR)**

(72) Inventor: **KANEKO, Takashi
Minoo-shi
Osaka 562-0036 (JP)**

(74) Representative: **Walaski, Jan Filip et al
Venner Shipley LLP
200 Aldersgate
London EC1A 4HD (GB)**

(56) References cited:
**EP-A1- 2 351 973**     **GB-A- 2 287 783**
**JP-A- H07 190 455**    **JP-A- 2006 329 468**
**JP-A- 2007 255 832**   **JP-A- 2011 007 422**
**JP-A- 2011 144 956**

**Description**

[Technical Field]

The present invention relates to an air conditioner having a function of reducing power consumption.

[Background Art]

An air conditioner having a demand control function for reducing power consumption such that power consumption does not exceed a predetermined threshold value is known. A method of adjusting an expansion valve open degree according to an external demand command is known as a demand control method (refer to reference 1). This method reduces power consumption by controlling the quantity of refrigerant circulating in an air conditioning cycle. However, since the method cannot optimally control the air conditioning cycle according to air-conditioning load, power reduction effect is limited.

A method of controlling a compressor speed according to an external demand command is known as another demand control method (refer to reference 2). This method can improve COP by reducing the quantity of refrigerant circulating in an air conditioning cycle and increasing the efficiency of the air conditioning cycle. However, since the method cannot optimally control the air conditioning cycle according to air-conditioning load, power reduction effect is limited. Furthermore, this method may cause an air conditioner to operate at a cooling evaporation temperature/heating condensation temperature which damages comfort of a user environment.

[Related Art References]

[Patent References]

  Patent Reference 1: Japanese Patent Application Publication No. 1995-190455
  Patent Reference 2 : Japanese Patent Application Publication No. 2011-7422

GB 2 287 783 discloses an air conditioning system according to the preamble of claim 1. EP 2 351 973 discloses a refrigeration cycle device.

[Disclosure]

[Technical Problem]

The aforementioned conventional demand control uniformly deteriorates capability of the air conditioner when power consumption of the air conditioner exceeds a predetermined threshold value. Accordingly, capability of the air conditioner is maintained rather than being deteriorated as long as power consumption does not exceed the threshold value even if user comfort is not damaged, or the capability of the air conditioner is deteriorated if power consumption exceeds the threshold value even when user comfort is damaged. Therefore, the conventional demand control lacks concern for user comfort cannot achieve both user comfort and power reduction.

Therefore, the present invention has been made in view of the above problems, and it is an object of the present invention to provide an air conditioner capable of achieving both user comfort and power reduction.

[Technical Solution]

According to an aspect of the invention, there is provided an air conditioner according to claim 1.

In accordance with an aspect of the present invention, the above and other objects can be accomplished by the provision of an air conditioner including an indoor unit and an outdoor unit, including: a mean room temperature sensing mechanism for sensing the mean room temperature of an indoor space in which the indoor unit is installed; a compressor contained in the outdoor unit; a compressor controller for controlling the compressor such that the pressure of a refrigerant discharged from the compressor or the pressure of a refrigerant sucked into the compressor becomes a target pressure value; a normal target pressure memory storing a normal target pressure set to a target value during normal control operation of the compressor controller and related with the outdoor temperature and air-conditioning load of the indoor space; a normal temperature difference computation unit for calculating a temperature difference between a normal saturation temperature corresponding to the normal target pressure and the mean room temperature as a normal temperature difference; and a power reduction temperature difference computation unit for calculating a power reduction temperature difference reduced from the normal temperature difference on the basis of a target power consumption decrement with respect to power consumption during normal control of the air conditioner, wherein the compressor controller is configured to control the compressor by changing a power reduction target pressure, which is a saturation pressure corresponding to a power reduction saturation temperature calculated on the basis of the mean room temperature and the power reduction temperature difference, to the target value. According to this configuration, based on the idea that capability of the air conditioner is wasted when user comfort is satisfied as the normal temperature difference (a temperature difference between the normal saturation temperature corresponding to the normal target pressure and the mean room temperature) increases, the normal temperature difference based on the target power consumption decrement is reduced in response to the magnitude of the normal temperature difference and the compressor is controlled using the power reduction target pressure based on the power reduction temperature difference reduced from the normal temperature difference, thereby setting the power reduction target pressure within the range within which user comfort can be maintained while securing power reduction effect at all times, compared to the conventional demand control scheme in which capability of the air conditioner is deteriorated only when power consumed by the air conditioner exceeds a predetermined threshold. Consequently, it is possible to enable power reduction without damaging user comfort, achieving both user comfort and power reduction.

In addition, the power reduction temperature difference computation unit calculates the power reduction temperature difference by multiplying the normal temperature difference by a power reduction coefficient based on the target power reduction decrement in order to set power consumption with high accuracy for demands of the user and to prevent deterioration of user comfort due to excessive increase of the target power reduction decrement, which is estimated during conventional demand control.

Furthermore, the air conditioner may further include a target power consumption decrement change unit capable of changing the target power consumption decrement according to operation of a user to obtain an optimized power reduction target pressure corresponding to an air-conditioning load of the indoor space, thereby achieving maximum power reduction.

Moreover, the compressor controller may include a power reduction saturation temperature setting unit for setting a value obtained by subtracting a predetermined value from the mean room temperature to the upper limit of the power reduction saturation temperature in a cooling mode of the air conditioner and setting a value obtained by adding the predetermined value to the mean room temperature to the lower limit of the power reduction saturation temperature in a heating mode of the air conditioner in order to prevent lack of cooling/heating performance due to insufficient capability of the indoor unit.

In addition, the power reduction saturation temperature setting unit may set the predetermined value to a value in the range of 3°C to 10°C in order to prevent poor heat exchange in the indoor unit and comfort deterioration due to an insufficient temperature difference between the air and refrigerant, which is estimated in the conventional demand control operation and to prevent power reduction effect from being deteriorated due to unnecessary power reduction saturation temperature restriction.

[Advantageous Effects]

According to the air conditioner of the present invention, the normal temperature difference based on the target power consumption decrement is reduced in response to the magnitude of the normal temperature difference and the compressor is controlled using the power reduction target pressure based on the power reduction temperature difference reduced from the normal temperature difference, thereby setting the power reduction target pressure within the range within which user comfort can be maintained while securing power reduction effects at all times, compared to the conventional demand control scheme in which capability of the air conditioner is deteriorated only when power consumed by the air conditioner exceeds a predetermined threshold, based on the idea that capability of the air conditioner is wasted when user comfort is satisfied as the normal temperature difference (a temperature difference between the normal saturation temperature corresponding to the normal target pressure and the mean room temperature) increases. Consequently, it is possible to enable power reduction without damaging user comfort, achieving both user comfort and power reduction.

[Description of Drawings]

The above and other objects, features and other advantages of the present invention will be more clearly understood from the following detailed description taken in conjunction with the accompanying drawings, in which:

FIG. 1 illustrates a refrigerant circuit of an air conditioner according to the present invention;
FIG. 2 is a block diagram of a controller;

FIG. 3 is a flowchart illustrating an exemplary demand control operation in a cooling mode according to an embodiment of the present invention;
FIG. 4 is a flowchart illustrating an exemplary demand control operation in a heating mode according to an embodiment of the present invention;
FIG. 5 illustrates a normal temperature difference (To) reduction operation; and

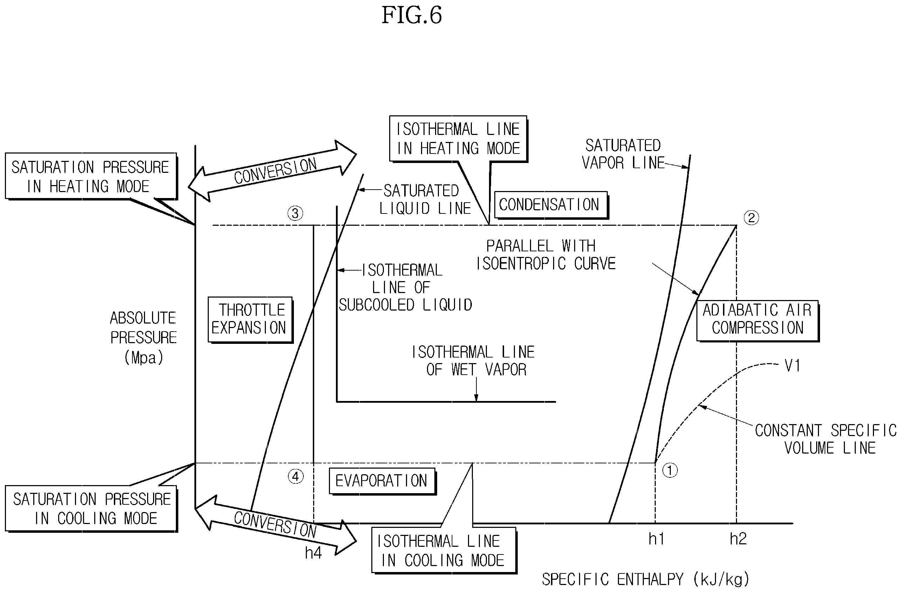

FIG. 6 illustrates an example of the relationship between a saturation pressure and a saturation temperature.

[Best Mode]

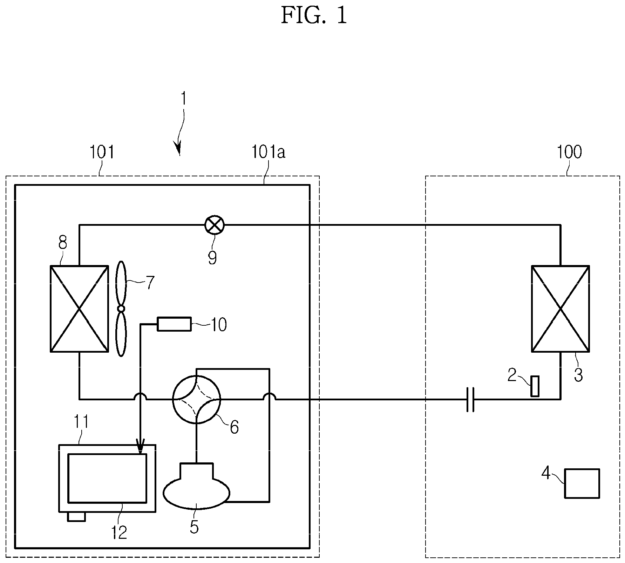

An air conditioner according to an embodiment of the present invention will now be described with reference to FIGS. 1 to 5.

[Configuration of air conditioner 1]

FIG. 1 illustrates a refrigerant circuit of an air conditioner according to the present invention. Referring to FIG. 1, the air conditioner 1 includes an indoor unit 100 and an outdoor unit 101. While the air conditioner 1 according to the present embodiment is an air conditioner used in a wide indoor space such as an office in a building and includes an outdoor unit and a plurality of indoor units distributed in the indoor space, FIG. 1 shows only the representative indoor unit 100 from among the plurality of indoor units for convenience of description.

The indoor unit 100 includes a temperature sensor 2 for sensing the room temperature, an indoor heat exchanger 3 and a remote controller 4 for controlling the indoor unit 100 according to user manipulation.

The outdoor unit 101 includes a compressor 5, a four-way switching valve 6, an outdoor fan 7, an outdoor heat exchanger 8, an expansion valve 9 and an outdoor temperature sensor 10 for sensing outdoor temperature. The outdoor unit 101 includes an outdoor unit casing 101a for accommodating the compressor 5, the outdoor fan 7, the outdoor heat exchanger 8 and an electronics case 11. The electronics case 11 contains a control board provided with a control unit 12 for controlling the rotational speed of the compressor 5 and the open degree of the expansion valve 9 on the basis of information from each temperature sensor.

[Operation of air conditioner 1]

The air conditioner 1 can achieve cooling performance by switching the four-way switching valve 6 to a dotted line shown in FIG. 1 and achieve heating performance by switching the four-way switching valve 6 to a solid line shown in FIG. 1.

[Configuration of control unit 12]

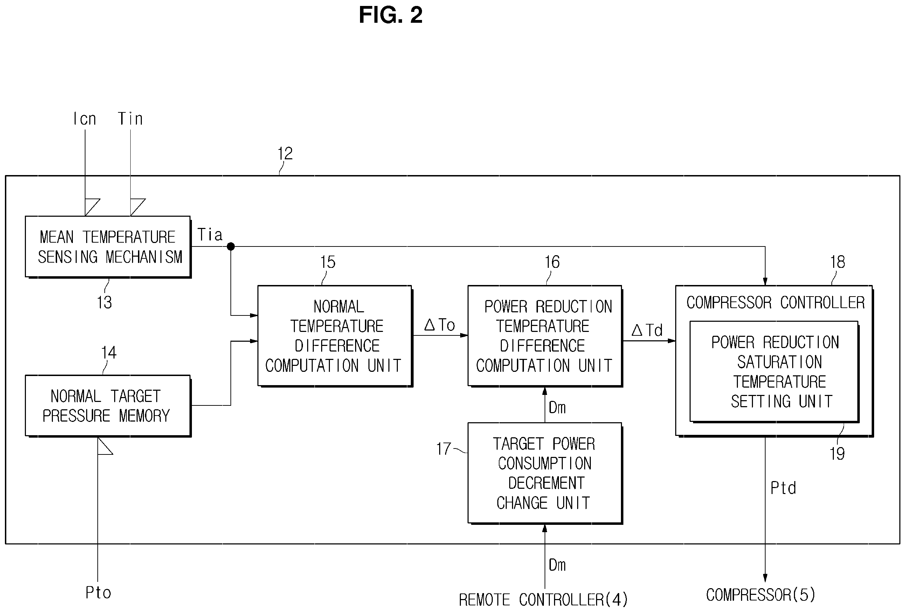

FIG. 2 illustrates a configuration of the control unit 12. The control unit includes a control mechanism for accomplishing the purposes of the present invention, that is, user comfort and energy reduction. As shown in FIG. 2, the control unit 12 includes a mean room temperature sensing mechanism 13, a normal target pressure memory 14, a normal temperature difference computation unit 15, a power reduction temperature difference computation unit 16, a target power consumption decrement change unit 17 and a compressor controller 18.

The mean room temperature sensing mechanism 13 is configured to sense a weighted average (mean room temperature) $Tia$ of the room temperature $Tin$ sensed by the room temperature sensor 2 by inputting capacity (air-conditioning load) $Icn$ of the indoor unit 100 and the room temperature $Tin$ to the following equation 1. In the "capacity $Icn$" and "room temperature $Tin$" which are elements of Equation 1, $n$ denotes an identification number of each indoor unit distributed in the indoor space. Accordingly, the mean room temperature sensing mechanism 13 can sense the weighted average $Tia$ of the room temperature $Tin$ according to capacity $Icn$ of an area corresponding to each indoor unit on the basis of Equation 1.

[Equation 1]

$$Tia = \sum (Tin \times Icn) \Big/ \sum (Icn) \quad \cdot \quad \cdot \quad \cdot \quad \cdot \quad (1)$$

The normal target pressure memory 14 is implemented as an EEPROM or flash memory capable of being electrically erased and programmed, for example, and is configured to store a normal target pressure set as a target value in normal control operation of the compressor controller 18. Here, the normal target pressure refers to pressure in relation with the outdoor temperature sensed by the outdoor temperature sensor 10 and indoor capacity $Icn$ and is used as normal target suction pressure $Pto$ in a cooling mode and used as normal target discharge pressure $Pto$ in a heating mode.

The normal temperature difference computation unit 15 is configured to convert the normal target pressure (normal target suction pressure $Pto$/normal target discharge pressure $Pto$) pre-stored in the normal target pressure memory 14 into a normal saturation temperature (normal target suction pressure saturation temperature $Tto$/normal target discharge pressure saturation temperature $Tto$). Here, conversion can be performed using the following equation with respect to refrigerant properties, which can convert between property values (saturation pressure and saturation temperature) of a refrigerant.

[Equation 2]

$$Tto = f_1(Pto) \cdot \cdot \cdot \cdot (2)$$

In addition, the normal temperature different computation unit 15 is configured to calculate a normal temperature difference $\Delta To$ by inputting the normal target suction pressure saturation temperature $Tto$ and the weighted average $Tia$ sensed by the mean room temperature sensing mechanism 13 to the following equation (3) in the cooling mode. Similarly, the normal temperature difference computation unit 15 is configured to calculate a normal temperature difference $\Delta To$ by inputting the normal target discharge pressure saturation temperature $Tto$ and the weighted average $Tia$ to the following equation (4) in the heating mode.

[Equation 3]

$$\Delta To = Tia - Tto \cdot \cdot \cdot \cdot (3)$$

[Equation 4]

$$\Delta To = Tto - Tia \cdot \cdot \cdot \cdot (4)$$

The power reduction temperature difference computation unit 16 is configured to calculate a demand temperature difference (temperature difference in case of power reduction) $\Delta Td$ reduced from the normal temperature difference $\Delta To$ by inputting a target demand amount (target power consumption decrement) Dm, which is predetermined for power consumed during normal control of the air conditioner 1, and the normal temperature difference $\Delta To$ calculated by the normal temperature difference computation unit 15 to the following equation (5). As can be known from the equation (5), the normal temperature difference $\Delta To$ can be reduced by multiplying the normal temperature difference $\Delta To$ by the target demand amount $Dm$. Accordingly, when the normal temperature difference $\Delta To$ is 25 °C and the target demand amount Dm is 80, the demand temperature difference $\Delta Td$ obtained by calculation corresponds to 25×80/100=20.

[Equation 5]

$$\Delta Td = \Delta To \times Dm / 100 \cdot \cdot \cdot \cdot (5)$$

The target power consumption decrement change unit 17 is configured to change the target demand amount $Dm$ according to manipulation of the remote controller 4 by a user. The target demand amount $Dm$ can be set to values such as 50, 60, 70, 80, 90 and 100. That is, a power reduction coefficient (target demand amount Dm/100) can be set to a large value when user comfort is prioritized and set to a small value when power reduction is prioritized. Here, a minimum value of the power reduction coefficient is set to a value that does not damage comfort of a user environment based on evaluation of comfort. For example, when the user wants to secure satisfactory comfort, the minimum value of the power reduction coefficient is set to 0.5. A maximum of the power reduction coefficient is set based on power consumption decrease allowable error and set to 1.1 when an error of about 10% is permitted, for example.

The compressor controller 18 is configured to control the compressor 5 such that the pressure of the refrigerant sucked into the compressor 5 in the cooling mode or the pressure of the refrigerant discharged from the compressor 5 in the heating mode becomes a target value.

The compressor controller 18 is configured to calculate a demand saturation temperature (saturation temperature in case of power reduction) $Ttd$ by inputting the weighted average $Tia$ sensed by the mean room temperature sensing mechanism 13 and the demand temperature difference $\Delta Td$ calculated by the power reduction temperature difference computation unit 16 to the following equation (6) in the cooling mode. Similarly, the compressor controller 18 is configured to calculate the demand saturation temperature (saturation temperature in case of power reduction) *Ttd* by inputting the weighted average *Tia* and the demand temperature difference $\Delta Td$ to the following equation (7).

[Equation 6]

$$Ttd = Tia - \Delta Td \cdot \cdot \cdot \cdot (6)$$

[Equation 7]

$$Ttd = Tia + \Delta Td \cdot \cdot \cdot \cdot (7)$$

The compressor controller 18 is configured to calculate power reduction target pressure by inputting the demand saturation temperature *Ttd* to the following equation (8). Here, the power reduction target pressure is used for demand control of the compressor controller 18 as power reduction target suction pressure *Ptd* in the cooling mode and as power reduction target discharge pressure *Ptd* in the heating mode.

[Equation 8]

$$Ptd = f_2(Ttd) \cdot \cdot \cdot \cdot (8)$$

The compressor controller 18 is configured to change the target value from the normal target pressure (normal target suction pressure Pto/normal target discharge pressure *Pto)* to the power reduction target pressure (power reduction target suction pressure Ptd/power reduction target discharge pressure *Ptd*) to control the compressor 5.

The compressor controller includes a power reduction saturation temperature setting unit 19 which can set a value, obtained by subtracting a predetermined value from the weighted average *Tia*, as the upper limit of the demand saturation temperature *Ttd* in the cooling mode and set a value, obtained by adding the predetermined value to the weighted average *Tia*, as the lower limit of the demand saturation temperature *Ttd* in the heating mode. In other words, the power reduction saturation temperature setting unit 19 can set the demand temperature difference $\Delta Td$ corresponding to the difference between the weighted average *Tia* and the demand saturation temperature *Ttd* to the predetermined value in the cooling mode. The power reduction saturation temperature setting unit 19 can set the demand temperature difference $\Delta Td$ corresponding to the difference between the demand saturation temperature *Ttd* and the weighted average *Tia* to the predetermined value in the heating mode. Here, the predetermined value can be set to a value in the range of 3 °C to 10 °C in order to avoid difficulty in heat exchange in the indoor unit 100 when a temperature difference between the air and refrigerant is lower than 3 °C and deterioration of power reduction effect due to sufficient heat exchange when the temperature difference exceeds 10 C. Accordingly, when the weighted average *Tia* is 25 °C and the predetermined value is 5 °C in the cooling mode, for example, the upper limit of the demand saturation temperature *Ttd* is set to 22 °C. When the weighted average *Tia* is 20 °C and the predetermined value is 5 °C in the heating mode, for example, the lower limit of the demand saturation temperature *Ttd* is set to 25 °C.

[Demand control operation according to the present embodiment]

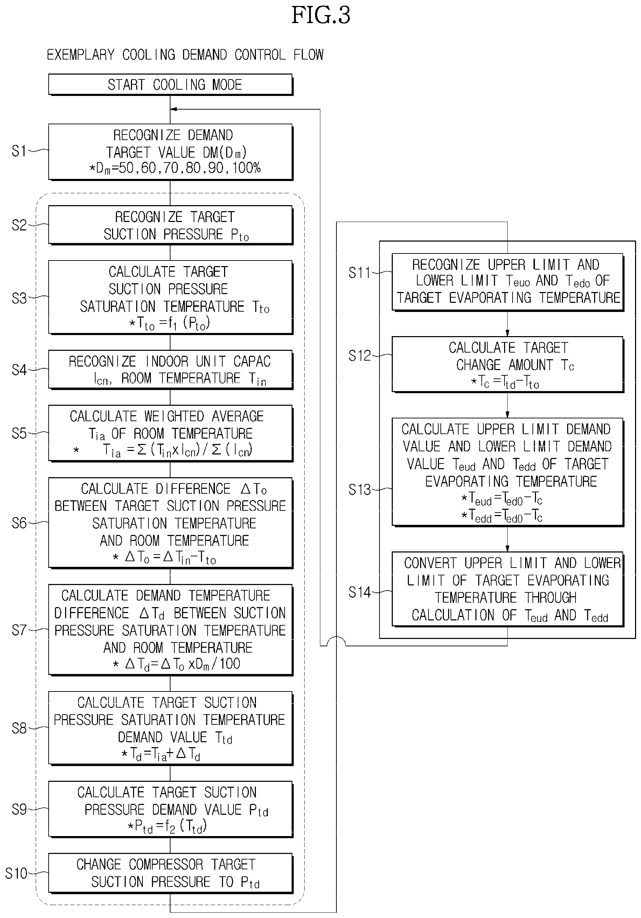

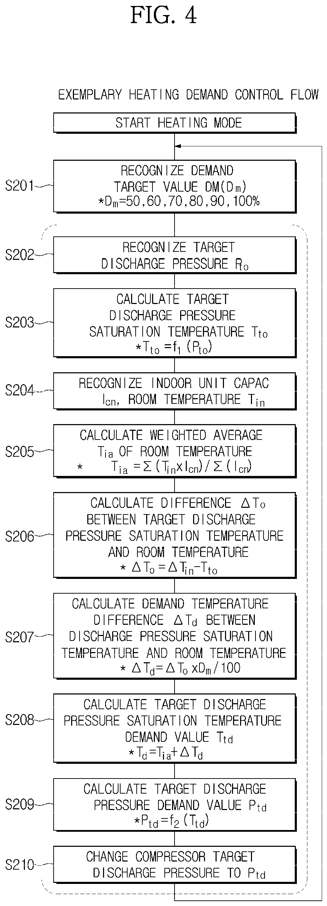

A description will be given of examples of demand control operation in the cooling mode and the heating mode with reference to FIGS. 3 and 4. Operations illustrated in FIGS. 3 and 4 can be implemented by executing programs stored in an ROM by the control unit 12.

[Demand control operation in cooling mode]

FIG. 3 is a flowchart illustrating an exemplary demand control operation in the cooling mode. In the demand control operation in the cooling mode, the predetermined target demand amount (target power consumption decrement) *Dm* is recognized in step S1.

The normal target suction pressure (normal target pressure) *Pto* pre-stored in the normal target pressure memory 14 is recognized in step S2.

The normal target suction pressure *Pto* is converted into the normal target suction pressure saturation temperature (normal saturation temperature) *Tto* using Equation (2) with respect to refrigerant properties in step S3.

Subsequently, capacity (air-conditioning load) *Icn* with respect to the indoor unit 100 and the room temperature *Tin* are recognized in step S4.

The weighted average (mean room temperature) *Tia* of the room temperature *Tin* is calculated using Equation (1) in step S5.

The normal temperature difference Δ*To* is calculated using Equation (3) in step S6.

The demand temperature difference (temperature difference in case of power reduction) is calculated using Equation (5) in step S7.

The demand saturation temperature (saturation temperature in case of power reduction) *Ttd* is calculated using Equation (6) in step S8.

The power reduction target suction pressure *Ptd* is calculated using Equation (8) in step S9.

The target value in the compressor controller 18 is changed from the normal target suction pressure *Pto* to the power reduction target suction pressure *Ptd* in step S10.

The upper limit *Teuo* and lower limit *Tedo* of a target evaporating temperature are recognized in step S11.

A change amount *Tc* capable of changing the upper limit *Teuo* and lower limit *Tedo* of the target evaporating temperature is calculated by inputting the demand saturation temperature *Ttd* and the normal target saturation temperature *Tto* to the following equation (9) in step S12.

[Equation 9]

$$Tc = Ttd - Tto \quad \cdot \quad \cdot \quad \cdot \quad ( \, 9 \, )$$

An upper limit demand value *Teud* and a lower limit demand value *Tedd* of the target evaporating temperature are calculated by inputting the upper limit *Teuo* and the change amount *Tc* to the following equation (10) and inputting the lower limit *Tedo* and the change amount *Tc* to the following equation (11), respectively, in step S14.

[Equation 10]

$$Teud = Teuo + Tc \quad \cdot \quad \cdot \quad \cdot \quad ( \, 1 \, 0 \, )$$

[Equation 11]

$$Tedd = Tedo + Tc \quad \cdot \quad \cdot \quad \cdot \quad ( \, 1 \, 1 \, )$$

After the upper limit *Teuo* and the lower limit *Tedo* of the target evaporating temperature are respectively converted into the upper limit demand value *Teud* and the lower limit demand value *Tedd* in step S14, the procedure is returned to step S1.

[Demand control operation in heating mode]

FIG. 4 is a flowchart illustrating an exemplary demand control operation in the heating mode. While steps S201 to S210 (except for steps S206 and S208) of the control operation shown in FIG. 4 correspond to steps S1 to S10 of the aforementioned control operation in the cooling mode, the control operation shown in FIG. 4 differs from the control operation shown in FIG. 3 in that the target value in the compressor controller 18 is changed from the normal target discharge pressure *Pto* to the power reduction target discharge pressure *Ptd*.

The predetermined target demand amount (target power consumption decrement) *Dm* is recognized in step S201.

The normal target discharge pressure (normal target pressure) *Pto* pre-stored in the normal target pressure memory 14 is recognized in step S202.

The normal target discharge pressure *Pto* is converted into the normal target discharge pressure saturation temperature (normal saturation temperature) *Tto* using Equation (2) with respect to refrigerant properties in step S203.

Capacity (air-conditioning load) *Icn* with respect to the indoor unit 100 and the room temperature *Tin* are recognized in step S204.

Subsequently, the weighted average (mean room temperature) *Tia* of the room temperature *Tin* is calculated using Equation (1) in step S205.

The normal temperature difference Δ*To* is calculated using Equation (4) in step S206.

The demand temperature difference (temperature difference in case of power reduction) is calculated using Equation (5) in step S207.

The demand saturation temperature (saturation temperature in case of power reduction) *Ttd* is calculated using Equation (7) in step S208.

The power reduction target discharge pressure *Ptd* is calculated using Equation (8) in step S209.

The target value in the compressor controller 18 is changed from the normal target discharge pressure *Pto* to the power reduction target discharge pressure *Ptd* in step S210. Then, the procedure is returned to step S201.

[Characteristics of the air conditioner in the present embodiment]

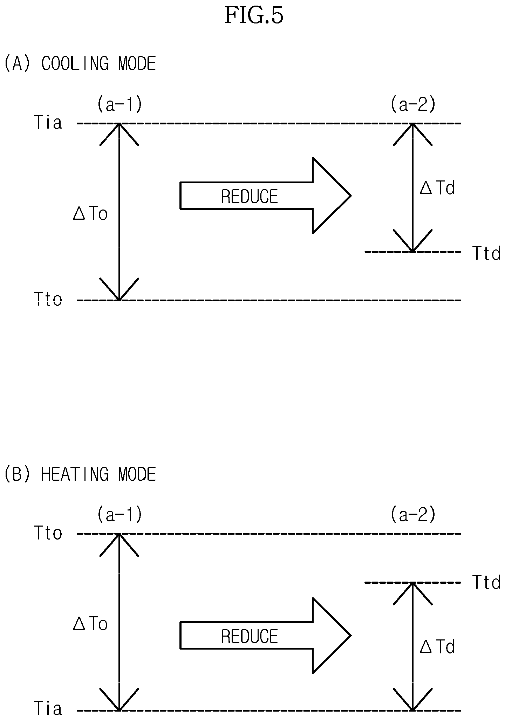

According to the aforementioned configuration, based on the idea that capability of the air conditioner 1 is wasted when user comfort is satisfied as the normal temperature difference $\Delta To$ (a temperature difference between the weighted average *Tia* and the normal target suction pressure saturation temperature *Tto,* shown in FIG. 5(a-1), or a temperature difference between the normal target suction pressure saturation temperature *Tto* and the weighted average *Tia,* shown in FIG. 5(b-1)) increases, the normal temperature difference $\Delta To$ based on the target demand amount *Dm* is reduced in response to the magnitude of the normal temperature difference $\Delta To$ to calculate the demand temperature difference $\Delta Td$ as shown in FIG. 5(a-2) or 5(b-2) and the compressor 5 is controlled using the power reduction target suction pressure Ptd/power reduction target discharge pressure *Ptd* based on the demand temperature difference $\Delta To$ as a target value, thereby setting the power reduction target suction pressure *Ptd*/power reduction target discharge pressure *Ptd* within the range within which user comfort can be maintained while securing power reduction effect at all times, compared to the conventional demand control scheme in which capability of the air conditioner is decreased only when power consumed by the air conditioner exceeds a predetermined threshold. Consequently, it is possible to enable power reduction without damaging user comfort, achieving both user comfort and power reduction.

In addition, according to the aforementioned configuration, optimized power reduction target suction pressure *Ptd*/power reduction target discharge pressure *Ptd* can be calculated on the basis of the target demand amount *Dm* corresponding to a command applied by the user through the remote controller 4. Accordingly, power reduction effect is maximized since optimized power reduction target suction pressure *Ptd*/power reduction target discharge pressure *Ptd* corresponding to indoor air-conditioning load can be obtained. For example, when demand control is performed in the cooling mode, high suction pressure can be set, compared to the conventional demand control. More specifically, when the suction pressure can be increased by 0.06 MPa, power reduction effect can be improved 6% approximately, compared to the conventional demand control.

Furthermore, according to the aforementioned configuration, since the demand control according to the present invention is based on the normal target pressure (normal target suction pressure *Pto*/normal target discharge pressure *Pto*) which is set as a target value in normal control operation of the compressor controller 18 and is in relation with the outdoor temperature and indoor air-conditioning load, power reduction effect can be obtained all the times even when user environment conditions are changed. For example, when demand control is performed in the cooling mode, suction pressure can be varied according to outdoor temperature variation. More specifically, when the outdoor temperature decreases by 1 °C, power reduction can be improved 2% approximately, compared to the conventional demand control.

Moreover, according to the above-described configuration, since the normal temperature difference $\Delta To$ is reduced by multiplying the normal temperature difference $\Delta To$ by the power reduction coefficient (target demand amount *Dm*/100), power consumption can be highly accurately set according to user demands. In addition, it is possible to prevent deterioration of user comfort due to an excessive target demand amount increase which is estimated during conventional demand control.

Furthermore, according to the aforementioned configuration, when the normal temperature difference $\Delta To$ is reduced, the target demand amount *Dm* can be set to 50, 60, 70, 80, 90 and 100 according to manipulation of the remote controller 4 by the user. In addition, since the power reduction coefficient (target demand amount *Dm*/100) can be set to a large value when user comfort is prioritized and set to a small value when power reduction is prioritized, demand control level can be adjusted according to the purpose of a building in which the air conditioner 1 is installed or user demands. Accordingly, it is possible to prevent deterioration of user comfort estimated during conventional demand control or a claim made by the user caused by insufficient power reduction.

In addition, according to the above-described configuration, a value obtained by subtracting a predetermined value from the weighted average *Tia* can be set to the upper limit of the demand saturation temperature *Ttd* in the cooling mode, whereas a value obtained by adding the predetermined value to the weighted average *Tia* can be set to the lower limit of the demand saturation temperature *Ttd* in the heating mode and thus it is possible to prevent lack of cooling/heating performance due to insufficient capability of the indoor heat exchanger 3. For example, when the demand saturation temperature *Ttd* is increased by 1 °C by setting the lower limit thereof during demand control in the cooling mode, cooling performance deterioration of approximately 5% can be prevented compared to conventional demand control.

Moreover, according to the aforementioned configuration, since the predetermined value can be set to a value in the range of 3 °C to 10 °C, it is possible to prevent poor heat exchange in the indoor unit and comfort deterioration due to insufficient temperature difference between the air and refrigerant, which is estimated in the conventional demand control operation. In addition, it is possible to prevent power reduction effect from being deteriorated due to unnecessary demand saturation temperature restriction.

While the embodiments of the present invention have been described with reference to the attached drawings, detailed configurations are not limited to the aforementioned embodiments. The scope of the present invention is defined by the appended claims as well as the above-described embodiments and includes equivalents and modifications falling within the scope of the appended claims.

Furthermore, while the compressor controller 18 calculates the power reduction target suction pressure *Ptd*/power reduction target discharge pressure *Ptd* by inputting the demand saturation temperature *Ttd* to Equation (8) in the above-described embodiment, the present invention is not limited thereto and the power reduction target suction pressure *Ptd*/power reduction target discharge pressure *Ptd* may be obtained based on outputs of suction/discharge pipe thermistors for detecting intake/discharge refrigerant temperatures in a suction pipe/discharge pipe of the compressor 5. Similarly, the compressor controller 18 can obtain the normal target suction pressure *Pto*/normal target discharge pressure *Pto* based on the outputs of the suction/discharge pipe theremistors. In addition, the compressor controller 18 can obtain the power reduction target suction pressure *Ptd*/power reduction target discharge pressure *Ptd* or the normal target suction pressure *Pto*/normal target discharge pressure *Pto* based on a command value from the control unit 12.

While the normal temperature difference computation unit 15 converts the normal target pressure (normal target suction pressure *Pto*/normal target discharge pressure *Pto)* into the normal saturation temperature (normal target suction pressure saturation temperature *Tto*/normal target discharge pressure saturation temperature *Tto*) using Equation (2) with respect to refrigerant properties in the aforementioned embodiment, the present invention is not limited thereto and the normal target pressure (normal target suction pressure *Pto*/normal target discharge pressure *Pto*) can be converted into the normal saturation temperature (normal target suction pressure saturation temperature *Tto*/normal target discharge pressure saturation temperature *Tto*) with reference to a refrigerant property table (look-up table) storing refrigerant properties. Otherwise, the present invention can convert the normal target pressure (normal target suction pressure *Pto*/normal target discharge pressure *Pto*) into the normal saturation temperature (normal target suction pressure saturation temperature *Tto*/normal target discharge pressure saturation temperature *Tto*) on the basis of the corresponding relationship between saturation pressure and saturation temperature of the refrigerant.

[Industrial Applicability]

According to the present invention, it is possible to provide an air conditioner capable of achieving both user comfort and power reduction.

**Claims**

1. An air conditioner including an indoor unit (100) and an outdoor unit (101), comprising:

   a mean room temperature sensing mechanism (13) for sensing the mean room temperature, Tia, of an indoor space in which the indoor unit is installed;
   a compressor (5) contained in the outdoor unit;
   a compressor controller (18) arranged to control the compressor based on a target pressure value, Ptd, such that the pressure of a refrigerant discharged from the compressor or the pressure of a refrigerant sucked into the compressor becomes the target pressure value;
   a normal target pressure memory (14) arranged to store a normal target pressure, Pto, which is arranged to be set as the target pressure value for normal control operation of the compressor controller, the normal target pressure being related to the outdoor temperature and air-conditioning load of the indoor space;
   a normal temperature difference computation unit (15) arranged to calculate a normal temperature difference, $\Delta$To;
   the air conditioner being **characterized in that**
   the normal temperature difference $\Delta$To is the difference between a normal saturation temperature corresponding to the normal target pressure Pto and the mean room temperature Tia,
   and **in that** the air conditioner comprises a power reduction temperature difference computation unit (16) arranged to receive a target power consumption decrement for reducing the power consumption of the air conditioner relative to power consumption during normal control of the air conditioner, and arranged to use the target power consumption decrement to calculate a power reduction temperature difference $\Delta$Td which is lower than the normal temperature difference $\Delta$To,
   wherein the compressor controller (18) is arranged to calculate a power reduction saturation temperature Ttd on the basis of the mean room temperature Tia and the calculated power reduction temperature difference $\Delta$Td, is further arranged to calculate a power reduction target pressure Ptd, which is a saturation pressure corresponding to the calculated power reduction saturation temperature Ttd, and is arranged to change the target pressure value to the power reduction target pressure Ptd.

2. The air conditioner according to claim 1, further comprising a target power consumption decrement change unit (17) arranged to change the target power consumption decrement according to operation of a user.

3. The air conditioner according to claim 1, wherein the compressor controller (18) comprises a power reduction saturation temperature setting unit (19) for setting a value obtained by subtracting a predetermined value from the mean room temperature to the upper limit of the power reduction saturation temperature in a cooling mode of the air conditioner and setting a value obtained by adding the predetermined value to the mean room temperature to the lower limit of the power reduction saturation temperature in a heating mode of the air conditioner.

4. The air conditioner according to claim 3, wherein the power reduction saturation temperature setting unit is arranged to set the predetermined value to a value in the range of 3°C to 10°C.

**Patentansprüche**

1. Klimaanlage, die eine Inneneinheit (100) und eine Außeneinheit (101) umfasst und die Folgendes umfasst:

einen Erfassungsmessmechanismus (13) der mittleren Raumtemperatur zum Messen der mittleren Raumtemperatur Tia eines Innenraums, in dem die Inneneinheit installiert ist;
einen Kompressor (5), der in der Außeneinheit enthalten ist;
eine Kompressorsteuerung (18), die dafür ausgelegt ist, den Kompressor basierend auf einem Zieldruckwert Ptd zu steuern, so dass der Druck eines Kältemittels, das von dem Kompressor abgegeben wird, oder der Druck eines Kältemittels, das in den Kompressor eingesaugt wird, der Zieldruckwert wird;
einen Speicher (14) des normalen Zieldrucks, der dafür ausgelegt ist, einen normalen Zieldruck, Pto, zu speichern, der dafür ausgelegt ist, als Zieldruckwert für den normalen Steuerungsbetrieb der Kompressorsteuerung eingestellt zu werden, wobei der normale Zieldruck mit der Außentemperatur und der Klimatisierungsbelastung des Innenraums in Beziehung steht;
eine Berechnungseinheit (15) der normalen Temperaturdifferenz, die dafür ausgelegt ist, eine normale Temperaturdifferenz ΔTo zu berechnen;
wobei die Klimaanlage **dadurch gekennzeichnet ist, dass** die normale Temperaturdifferenz ΔTo die Differenz zwischen einer normalen Sättigungstemperatur ist, die dem normalen Zieldruck Pto und der mittleren Raumtemperatur Tia entspricht, und dass die Klimaanlage eine Berechnungseinheit (16) der Energieverringerungs-Temperaturdifferenz umfasst, die dafür ausgelegt ist, eine Zielenergieverbrauchsverringerung zu empfangen, um den Energieverbrauch der Klimaanlage im Verhältnis zu dem Energieverbrauch während der normalen Steuerung der Klimaanlage zu verringern, und die dafür ausgelegt ist, die Zielenergieverbrauchsverringerung zu verwenden, um eine Energieverringerungs-Temperaturdifferenz ΔTd zu berechnen, die niedriger ist als die normale Temperaturdifferenz ΔTo, wobei die Kompressorsteuerung (18) für Folgendes ausgelegt ist: Berechnen einer Energieverringerungssättigungstemperatur Ttd basierend auf der mittleren Raumtemperatur Tia und der berechneten Energieverringerungs-Temperaturdifferenz ΔTd, Berechnen eines Energieverringerungs-Zieldrucks Ptd, der ein Sättigungsdruck ist, der der berechneten Energieverringerungs-Sättigungstemperatur Ttd entspricht, und Ändern des Zieldruckwerts auf den Energieverringerungszieldruck Ptd.

2. Klimaanlage nach Anspruch 1, die ferner eine Zielenergieverbrauchs-Dekrementänderungseinheit (17) umfasst, die dafür ausgelegt ist, die Zielenergieverbrauchsverringerung gemäß der Betätigung eines Benutzers zu ändern.

3. Klimaanlage nach Anspruch 1, wobei die Kompressorsteuerung (18) eine Energieverringerungs-Sättigungstemperatureinstelleinheit (19) umfasst, um einen Wert einzustellen, der durch Subtrahieren eines vorbestimmten Wertes von der mittleren Raumtemperatur zu dem oberen Grenzwert der Energieverringerungs-Sättigungstemperatur in einem Kühlmodus der Klimaanlage erhalten wird, und um einen Wert einzustellen, der durch Addieren des vorbestimmten Wertes zu der mittleren Raumtemperatur zu dem unteren Grenzwert der Energieverringerungs-Sättigungstemperatur in einem Heizmodus der Klimaanlage erhalten wird.

4. Klimaanlage nach Anspruch 3, wobei die Energieverringerungs-Sättigungstemperatureinstelleinheit dafür ausgelegt ist, den vorbestimmten Wert auf einen Wert im Bereich von 3 °C bis 10 °C einzustellen.

**Revendications**

1. Climatiseur incluant une unité intérieure (100) et une unité extérieure (101), comprenant :

    un mécanisme de captage de température ambiante moyenne (13) pour capter la température ambiante moyenne, Tia, d'un espace intérieur dans lequel l'unité intérieure est installée ;
    un compresseur (5) contenu dans l'unité extérieure ;
    un contrôleur de compresseur (18) agencé de façon à contrôler le compresseur sur la base d'une valeur de pression cible, Ptd, de telle sorte que la pression d'un frigorigène déchargé à partir du compresseur ou la pression d'un frigorigène aspiré dans le compresseur devienne la valeur de pression cible ;
    une mémoire de pression cible normale (14) agencée de façon à stocker une pression cible normale, Pto, qui est agencée de façon à être réglée comme étant la valeur de pression cible pour une opération de contrôle normale du contrôleur de compresseur, la pression cible normale étant liée à la température extérieure et à la charge de climatisation de l'espace intérieur ;
    une unité de calcul de la différence de température normale (15) agencée de façon à calculer une différence de température normale, ∆To ;
    le climatiseur étant **caractérisé en ce que**
    la différence de température normale ∆To est la différence entre une température de saturation normale correspondant à la pression cible normale Pto et la température ambiante moyenne Tia,
    et **en ce que** le climatiseur comprend une unité de calcul de la différence de température à réduction d'énergie (16) agencée de façon à recevoir un décrément de la consommation d'énergie cible pour réduire la consommation d'énergie du climatiseur relativement à la consommation d'énergie pendant un contrôle normal du climatiseur, et agencée de façon à utiliser le décrément de la consommation d'énergie cible pour calculer une différence de température à réduction d'énergie ∆Td qui est plus faible que la différence de température normale ∆To,
    cas dans lequel le contrôleur de compresseur (18) est agencé de façon à calculer une température de saturation à réduction d'énergie Ttd sur la base de la température ambiante moyenne Tia et la différence de température à réduction d'énergie calculée ∆Td, est agencé en outre de façon à calculer une pression cible à réduction d'énergie Ptd, qui est une pression de saturation correspondant à la température de saturation à réduction d'énergie calculée Ttd, et est agencé de façon à changer la valeur de la pression cible à la pression cible à réduction d'énergie Ptd.

2. Climatiseur selon la revendication 1, comprenant en outre une unité de changement du décrément de la consommation d'énergie cible (17) agencée de façon à changer le décrément de la consommation d'énergie cible en fonction de l'utilisation par un utilisateur.

3. Climatiseur selon la revendication 1, le contrôleur de compresseur (18) comprenant une unité de réglage de la température de saturation à réduction d'énergie (19) pour régler une valeur obtenue par soustraction d'une valeur prédéterminée depuis la température ambiante moyenne à la limite supérieure de la température de saturation à réduction d'énergie dans un mode de refroidissement du climatiseur, et régler une valeur obtenue par adjonction de la valeur prédéterminée à la température ambiante moyenne à la limite inférieure de la température de saturation à réduction d'énergie dans un mode de chauffage du climatiseur.

4. Climatiseur selon la revendication 3, l'unité de réglage de la température de saturation à réduction d'énergie étant agencée de façon à régler la valeur prédéterminée à une valeur dans la gamme de 3°C à 10°C.

FIG. 1

# FIG. 2

# FIG.3

EXEMPLARY COOLING DEMAND CONTROL FLOW

START COOLING MODE

S1 — RECOGNIZE DEMAND
TARGET VALUE DM($D_m$)
*$D_m$=50,60,70,80,90,100%

S2 — RECOGNIZE TARGET
SUCTION PRESSURE $P_{to}$

S3 — CALCULATE TARGET
SUCTION PRESSURE
SATURATION TEMPERATURE $T_{to}$
*$T_{to}$ =$f_1$ ($P_{to}$)

S4 — RECOGNIZE INDOOR UNIT CAPAC
$I_{cn}$, ROOM TEMPERATURE $T_{in}$

S5 — CALCULATE WEIGHTED AVERAGE
$T_{ia}$ OF ROOM TEMPERATURE
* $T_{ia}$ =Σ($T_{in}$×$I_{cn}$)/Σ($I_{cn}$)

S6 — CALCULATE DIFFERENCE Δ$T_o$
BETWEEN TARGET SUCTION PRESSURE
SATURATION TEMPERATURE
AND ROOM TEMPERATURE
* Δ$T_o$ =Δ$T_{in}$–$T_{to}$

S7 — CALCULATE DEMAND TEMPERATURE
DIFFERENCE Δ$T_d$ BETWEEN SUCTION
PRESSURE SATURATION TEMPERATURE
AND ROOM TEMPERATURE
* Δ$T_d$=Δ$T_o$×$D_m$/100

S8 — CALCULATE TARGET SUCTION
PRESSURE SATURATION TEMPERATURE
DEMAND VALUE $T_{td}$
*$T_d$=$T_{ia}$+Δ$T_d$

S9 — CALCULATE TARGET SUCTION
PRESSURE DEMAND VALUE $P_{td}$
*$P_{td}$ =$f_2$ ($T_{td}$)

S10 — CHANGE COMPRESSOR TARGET
SUCTION PRESSURE TO $P_{td}$

S11 — RECOGNIZE UPPER LIMIT AND
LOWER LIMIT $T_{euo}$ AND $T_{edo}$ OF
TARGET EVAPORATING TEMPERATURE

S12 — CALCULATE TARGET
CHANGE AMOUNT $T_c$
*$T_c$ =$T_{td}$–$T_{to}$

S13 — CALCULATE UPPER LIMIT DEMAND
VALUE AND LOWER LIMIT DEMAND
VALUE $T_{eud}$ AND $T_{edd}$ OF TARGET
EVAPORATING TEMPERATURE
*$T_{eud}$ =$T_{ed0}$–$T_c$
*$T_{edd}$ =$T_{edo}$–$T_c$

S14 — CONVERT UPPER LIMIT AND LOWER
LIMIT OF TARGET EVAPORATING
TEMPERATURE THROUGH
CALCULATION OF $T_{eud}$ AND $T_{edd}$

# FIG. 4

EXEMPLARY HEATING DEMAND CONTROL FLOW

| START HEATING MODE |
| --- |

S201 — RECOGNIZE DEMAND TARGET VALUE DM($D_m$) *$D_m$=50,60,70,80,90,100%

S202 — RECOGNIZE TARGET DISCHARGE PRESSURE $P_{to}$

S203 — CALCULATE TARGET DISCHARGE PRESSURE SATURATION TEMPERATURE $T_{to}$ *$T_{to} = f_1(P_{to})$

S204 — RECOGNIZE INDOOR UNIT CAPAC $I_{cn}$, ROOM TEMPERATURE $T_{in}$

S205 — CALCULATE WEIGHTED AVERAGE $T_{ia}$ OF ROOM TEMPERATURE * $T_{ia} = \Sigma(T_{in} \times I_{cn}) / \Sigma(I_{cn})$

S206 — CALCULATE DIFFERENCE $\Delta T_o$ BETWEEN TARGET DISCHARGE PRESSURE SATURATION TEMPERATURE AND ROOM TEMPERATURE * $\Delta T_o = \Delta T_{in} - T_{to}$

S207 — CALCULATE DEMAND TEMPERATURE DIFFERENCE $\Delta T_d$ BETWEEN DISCHARGE PRESSURE SATURATION TEMPERATURE AND ROOM TEMPERATURE * $\Delta T_d = \Delta T_o \times D_m / 100$

S208 — CALCULATE TARGET DISCHARGE PRESSURE SATURATION TEMPERATURE DEMAND VALUE $T_{td}$ *$T_d = T_{ia} + \Delta T_d$

S209 — CALCULATE TARGET DISCHARGE PRESSURE DEMAND VALUE $P_{td}$ *$P_{td} = f_2(T_{td})$

S210 — CHANGE COMPRESSOR TARGET DISCHARGE PRESSURE TO $P_{td}$

# FIG.5

## (A) COOLING MODE

## (B) HEATING MODE

## FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7190455 A
- JP 2011007422 A
- GB 2287783 A
- EP 2351973 A